# EUROPÄISCHE PATENTANMELDUNG

(11) **EP 0 659 663 A1**
(43) Veröffentlichungstag der Anmeldung: **28.06.1995**
(21) Anmeldenummer: 94810715.6
(22) Anmeldetag: 12.12.1994
(51) Int. Cl.: B65G 39/16

(54) **Vorrichtung zur Regelung des Geradelaufs eines Bandes**

(30) Priorität: 23.12.1993 CH 3857/93
(71) Anmelder: Transver AG, CH-8852 Altendorf (CH)
(72) Erfinder: Bucher, Markus, CH-6037 Root (CH)
(74) Vertreter: Groner, Manfred

(57) **Zusammenfassung**

Zur Regelung des Geradelaufs des Bandes (1) ist eine Andrückrolle (7) auf einer Achse (8) gelagert, die im Bereich einer ersten Kante (1c) des Bandes (1) an einem ersten Ende (7a) schwenkbar gelagert ist. Im Bereich der zweiten Kante (1d) des Bandes (1) ist die Achse der Andrückrolle (7) mit Führungs- und Verstellmitteln (23,15) verbunden und angenähert in der Bandebene verschieblich geführt. Auf einer mit der Achse (8) fest verbundenen Seitenplatte sind zwei Steuertasten angebracht, die bei einem seitlichen Auswandern des Bandes (1) von einem Arm eines Bandkantentasters (22) überdeckt werden. Die Vorrichtung zeichnet sich durch eine geringere Beanspruchung der Bandkanten aus.

## Beschreibung

Die Erfindung betrifft eine Vorrichtung zur Regelung des Geradelaufs eines Bandes einer Transportanlage mit mindestens einer Andrückrolle, die mittels eines Stellantriebs in der Bandebene auslenkbar ist, und mit wenigstens einem Bandkantentaster, der mit dem Stellantrieb zusammenarbeitet um bei einem seitlichen Auswandern des Bandes die Andrückrolle zur Ausrichtung des Bandes auszulenken.

Eine Vorrichtung dieser Art ist aus der DE-A-35 40 881 bekannt geworden. Bei dieser ist die Ausrichtwalze frei drehbar in einer Führungsgabel gehaltert, die im mittleren Bereich der Ausrichtwalze um eine vertikale Achse schwenkbar gelagert ist. Die Bandkantentaster sind Abtastrollen, die auf einem etwa parallel zur Ausrichtwalze verlaufenden Träger gelagert sind. Auf einem Ende ist der Träger über eine Koppelstange mit einem Lagerteil der Ausrichtwalze verbunden um diese bei einem seitlichen Auswandern der Bahn zu verstellen. Zum Verstellen der Ausrichtwalze sind bei dieser Ausführung nur mechanische Mittel vorgesehen. Die Vorrichtung soll sich auch für dünnere Bänder eignen, deren Kanten keine grossen Kräfte auf die Abtastrollen übertragen können. In mechanischer Hinsicht ist diese Vorrichtung vergleichsweise aufwendig und schwerfällig.

Durch die DE-C-30 16 203 ist ferner eine Einrichtung zur Aufrechterhaltung des Geradelaufes von Förderbändern bekannt geworden, bei der ein Lager einer Umlenkrolle mittels einer Stellstange so schwenkbar ist, dass ein seitliches Verlaufen des Förderbandes korrigierbar ist. Bei dieser Einrichtung besteht die Schwierigkeit, dass die Umlenkrolle, die hier zur Ausrichtung des Bandes in der Bandebene verschwenkt wird, unter sehr grossen Bandkräften steht und dadurch eine hohe Bandkantenpressung durch den Bandlauffühler der Förderbandgeradelauf-Regeleinrichtung zu erwarten ist.

Es ist Aufgabe der Erfindung, eine Vorrichtung der genannten Gattung zu schaffen, welche die oben genannten Nachteile vermeidet und die somit wesentlich einfacher und dennoch funktionssicher ist. Insbesondere soll die Belastung der Bandkanten durch die Regeleinrichtung kleiner sein.

Die Erfindung ist bei einer gattungsgemässen Vorrichtung dadurch gelöst, dass die Andrückrolle auf einer Achse gelagert ist, welche im Bereich einer ersten Kante des Bandes an einem ersten Ende schwenkbar gelagert ist und die im Bereich der zweiten Kante des Bandes an ihrem zweiten Ende mit Führungs- und Verstellmitteln verbunden ist und die Achse an ihrem zweiten Ende angenähert in der Bandebene verschieblich geführt ist. Bei der erfindungsgemässen Vorrichtung ist eine Führungsgabel oder ein ähnliches Hilfsgestell für die Lagerung der Antriebsrolle entbehrlich. Die Ausrichtwalze ist auch nicht wie bisher üblich in ihrem mittleren Bereich schwenkbar gelagert, sondern an einem Ende der Achse dieser Ausrichtwalze. Die Achse kann mittels eines Schwenklagers sehr einfach am Gestell gelagert werden. Die Führungsmittel sind gemäss einer Weiterbildung der Erfindung besonders einfach durch eine gestellfeste Auflage und eine verschieblich auf dieser aufliegenden Seitenplatte realisierbar. Der Stellantrieb kann gemäss einer Weiterbildung der Erfindung unmittelbar in dieser Seitenplatte gelenkig verbunden sein um diese bei einer Korrekturbewegung zu verschieben.

Die Belastung der Bandkanten ist dann besonders gering, wenn bei einer vorteilhaften Weiterbildung der Erfindung auf der Seitenplatte berührungslose Steuertaster angeordnet sind, die bei einem seitlichen Auswandern des Bandes von einem Arm des Bandkantentasters überdeckt werden und aufgrund einer solchen Ueberdeckung der Stellantrieb gesteuert wird. Da der Bandkantentaster keine Kräfte auf ein Gestell oder eine Stange übertragen muss, ist die Belastung der entsprechenden Bandkante minim. Da der Bandkantentaster mechanisch kaum belastet ist, kann er beispielsweise aus Kunststoff und damit sehr kostengünstig hergestellt werden.

Die Regelung erfolgt dann besonders genau, wenn gemäss einer vorteilhaften Weiterbildung der Erfindung im Bereich der zweiten Bandkante ein schwenkbarer und zweiarmiger Hebel angeordnet ist und an einem kürzeren Hebelarm dieses Hebels der Bandkantentaster angeordnet ist und der längere Hebelarm mit den Steuertastern zusammenarbeitet. Eine kleine Seitenverschiebung des Bandes führt dann zu einer wesentlich grösseren Auslenkung des längeren Hebels, was eine sehr genaue Regelung ermöglicht.

Weitere vorteilhafte Merkmale ergeben sich aus den abhängigen Patentansprüchen, der nachfolgenden Beschreibung sowie der Zeichnung.

Zwei Ausführungsbeispiele der Erfindung werden nachfolgend anhand der Zeichnung näher erläutert. Es zeigen:
- Fig. 1: schematisch eine Seitenansicht einer erfindungsgemässen Vorrichtung,
- Fig. 2: schematisch eine Draufsicht auf die Vorrichtung gemäss Fig. 1,
- Fig. 3: eine Ansicht gemäss Fig. 2, jedoch mit verstellter Andrückrolle,
- Fig. 4: schematisch eine Ansicht einer Variante der erfindungsgemässen Vorrichtung,
- Fig. 5: eine Draufsicht auf die Vorrichtung gemäss Fig. 4, und
- Fig. 6: ein Blockschaltbild einer Steuerung.

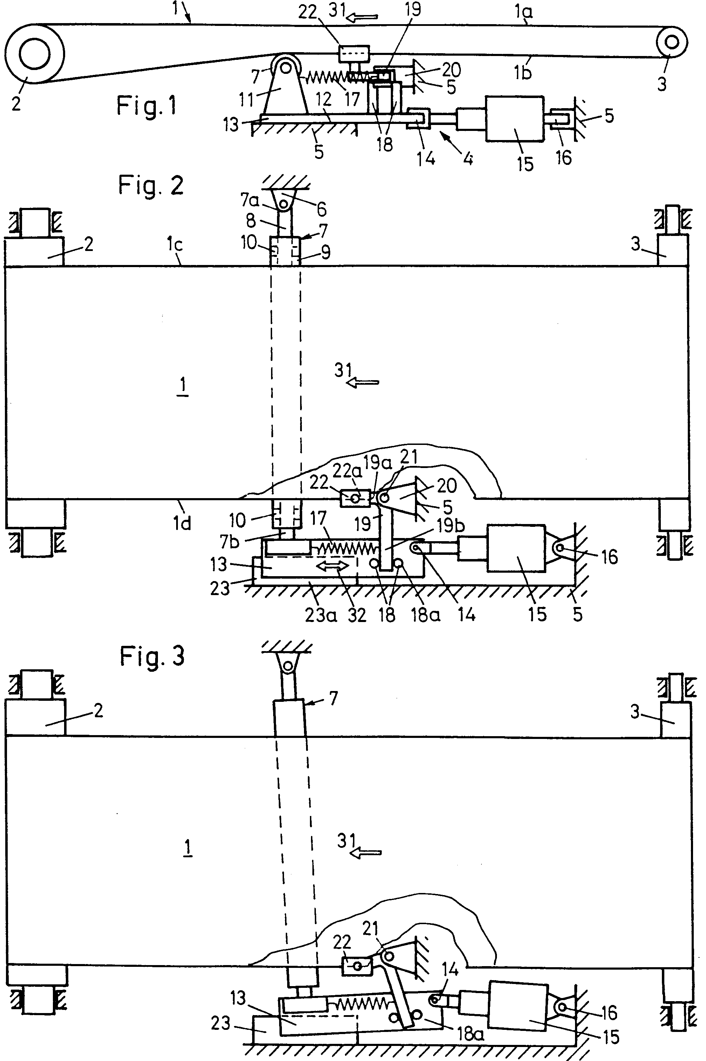

Die Fig. 1 zeigt ein endloses Transportband 1 mit einem Transporttrum 1a und einem Rücklauftrum 1b. Das Band läuft um eine Umlenkrolle 3 und eine Antriebsrolle 2 in Richtung des Pfeils 31. Das Band 1 ist beispielsweise 1,5 m breit und weist eine erste gerade Bandkante 1c und eine dazu parallele zweite Bandkante 1d auf.

Um den Geradelauf des Bandes 1 zu regeln, ist unterhalb des Rücklauftrums 1b eine Regelvorrichtung 4 angeordnet, die eine Andrückrolle 7 aufweist, die an einem ersten Ende 7a mittels eines Schwenklagers 6 horizontal verschwenkbar an einem Gestell 5 angelenkt ist. Die Andrückrolle 7 weist eine Achse 8 auf, auf der mittels Wälzlagern 10 eine Rolle 9 drehbar gelagert ist. An einem zweiten Ende 7b der Andrückrolle 7 ist ein herausragendes Ende der Achse 8 fest mit einem Vertikalträger 11 verbunden, der wiederum fest an einem plattenförmigen Horizontalträger 12 angebracht ist. Dieser Horizontalträger 12 liegt horizontal verschieblich auf einer Gestellauflage 23 des Gestells 5. Die Gestellauflage 23 besitzt eine ebene horizontale obere Führungsfläche 23a, welche dem Horizontalträger 12 eine stabile aber horizontal leicht verschiebbare Führung ermöglicht.

Am Horizontalträger 12 ist über ein Gelenk 14 ein Stellantrieb 15 verbunden, der wiederum über ein Gelenk 16 am Gestell 5 befestigt ist. Mittels des Stellantriebs 15 kann der Horizontalträger 12 in den beiden Richtungen des Doppelpfeils 32 (Fig. 2) begrenzt horizontal verschoben werden. Dadurch wird die Achse 8 und mit ihr die Rolle 9 um den Drehpunkt des Schwenklagers 6 in der Bandebene in der einen oder anderen Richtung verschwenkt. Eine solche Verschwenkung der Antriebsrolle 2 hat zur Folge, dass ein Abwandern des Bandes von der gewünschten Laufrichtung verhindert werden kann.

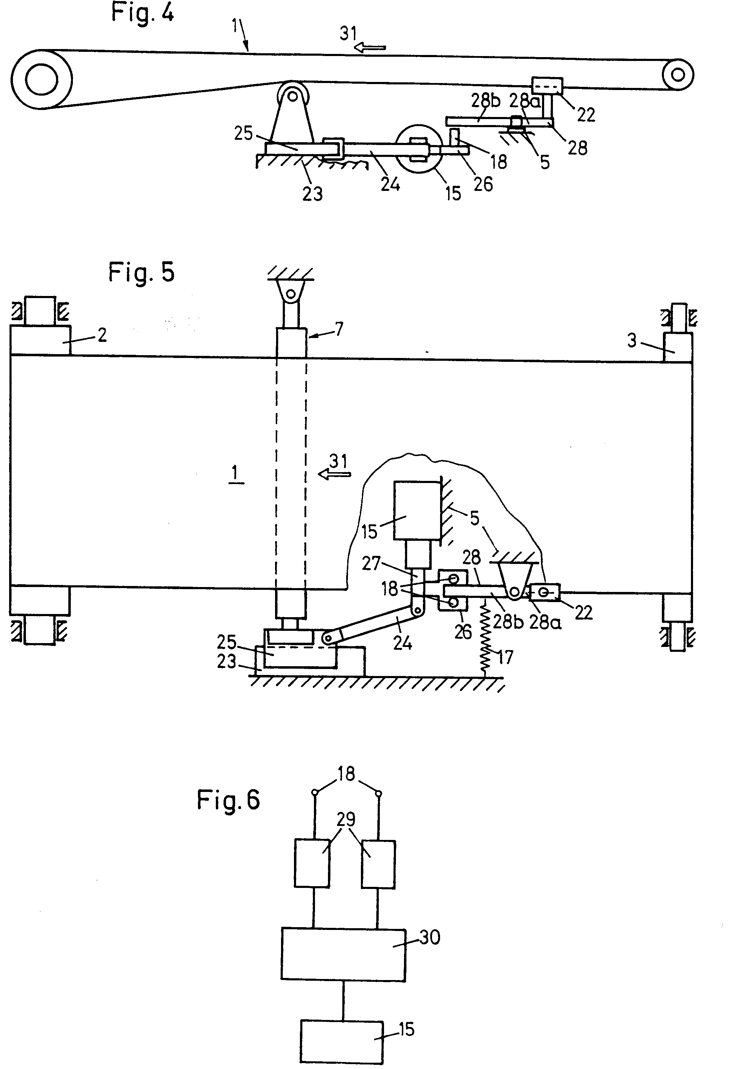

Zum Feststellen eines seitlichen Auswandern des Bandes 1 ist an einem schwenkbaren zweiarmigen Hebel 19 ein Bandkantentaster 22 angeordnet, der gemäss Fig. 2 an der zweiten Bandkante 1d unter Spannung einer Zugfeder 17 anliegt. Der Bandkantentaster 22 weist einen Schlitz 22a auf, in welchen die Bandkante eingreift und darin verläuft. Der Hebel 19 ist an einem gestellfesten Lager 20 um eine vertikale Achse 21 verschwenkbar gelagert. Der Bandkantentaster ist an einem vergleichsweise kurzem sich in Laufrichtung 31 erstrekkenden Hebelarm 19a angebracht. Der zweite, sich vertikal zur Kante ld seitlich nach aussen erstreckende längere Hebelarm 19b erstreckt sich mit seinem freien Ende über eine Seitenplatte 13, die im wesentlichen aus dem Horizontalträger 12 sowie zwei auf diesen angebrachten Steuertastern 18 besteht. Die an sich bekannten Steuertaster 18 sind beispielsweise Lichtdioden oder Induktionsspulen, die ein Signal abgeben, wenn der längere Hebelarm 19b den einen oder anderen Steuertaster überdeckt. Ein solches Signal wird gemäss Fig. 6 über ein Zeitrelais 29 einer Steuerung 30 zugeführt, die entsprechend den Stellantrieb 15 betätigt.

Anhand der Figuren 2 und 3 soll die Regelung kurz erläutert werden. Bei der Anordnung gemäss Fig. 2 läuft das Band wie gewünscht gerade. Die Andrückrolle 7 verläuft quer zur Laufrichtung 31 des Bandes 1 und der Hebel 19 ist so gestellt, dass der längere Hebelarm 19b sich zwischen die Taster 18 erstreckt und weder den einen noch den anderen Taster überdeckt. Wandert nun das Band 1 in Fig. 2 nach unten aus, so wird der Bandkantentaster 22 im Gegenuhrzeigersinn um die Achse 21 entsprechend verschwenkt und der längere Hebelarm 19b überdeckt in Fig. 2 den rechten Taster 18a. Wird der Steuertaster 18a länger als eine bestimmte kurze Zeitspanne überdeckt, so wird mittels des Stellantriebs 15 die Seitenplatte 13 in Fig. 2 nach rechts verschoben, bis der Hebelarm 19a den Steuertaster 18a nicht mehr überdeckt. Wie die Fig. 3 nun deutlich zeigt, ist nun die Andrückrolle 7 aus der Grundstellung heraus verschwenkt. Durch die Richtwirkung der Schrägstellung der Andrückrolle 7 wird ein weiteres Abwandern des Bandes 1 wirksam verhindert. Läuft das Band 1 in die andere Richtung so folgt der Bandkantentaster 22 aufgrund der Zugspannung der Feder 17 entsprechend nach. Dazu genügt eine vergleichsweise geringe Spannung dieser Feder 17.

Der Bandkantentaster 22 kann beispielsweise aus Kunststoff mit sehr geringem Gewicht hergestellt werden, so dass die Belastung der Bandkante 1d durch den anliegenden Bandkantentaster 22 sehr klein ist. Da der Hebelarm 19b wie ersichtlich wesentlich länger ist als der Hebelarm 19a, bewirkt eine vergleichsweise kleine Auslenkung des Bandes 1 eine entsprechend grössere Auslenkung des freien Endes des Hebelarms 19b. Dadurch ist es möglich, schon bei einer vergleichsweise kleinen andauernden Auslenkung des Bandes 1 eine entsprechende Richtwirkung auszuüben. Nur sehr kurzzeitige Auslenkungen oder Unebenheiten der Bandkante 1d führen aufgrund der Zeitrelais 29 nicht zu einer Stellbewegung.

Bei der Ausführungsvariante gemäss den Figuren 4 und 5 ist der Stellantrieb 15 über einen Kniehebel 24 mit einer Seitenplatte 25 verbunden. Die hier ebenfalls vorgesehenen berührungslosen Steuertaster 18 befinden sich auf der Oberseite einer Steuertastplatte 26, die direkt an einer Kolbenstange 27 des Stellantriebs 5 angebracht ist. Der Bandkantentaster 22 befindet sich ebenfalls an einem zweiarmigen, schwenkbar am Gestell 5 gelagerten Hebel 28. Dieser Hebel 28 ist gerade und verläuft im wesentlichen parallel zur zweiten Bandkante 1d, wie die Fig. 5 deutlich zeigt. Die übrige mechanische Ausbildung und die Steuerung ist bei dieser Ausführung im wesentlichen gleich wie bei der oben erläuterten Vorrichtung.

## Patentansprüche

1. Vorrichtung zur Regelung des Geradelaufs eines Bandes (1) in einer Transportanlage mit mindestens einer Andrückrolle (7), die mittels eines Stellantriebs (15) in der Bandebene auslenkbar ist, und mit wenigstens einem Bandkantentaster (22), der mit dem Stellantrieb (15) zusammenarbeitet um bei einem seitlichen Auswandern des Bandes (1) die Andrückrolle (7) zum Ausrichten des Bandes auszulenken, dadurch gekennzeichnet, dass die Andrückrolle (7) auf einer Achse (8) gelagert ist, welche im Bereich einer ersten Kante (1c) des Bandes (1) an einem ersten Ende (7a) schwenkbar gelagert ist und die im Bereich der zweiten Kante (1d) des Bandes (1) an ihrem zweiten Ende (7b) mit Führungs- und Verstellmitteln (23,15) verbunden ist und die Achse (8) an ihrem zweiten Ende (7b) angenähert in der Bandebene verschieblich geführt ist.

2. Vorrichtung nach Anspruch 1, dadurch gekennzeichnet, dass ein Bandkantentaster (22) an der zweiten Kante (1d) des Bandes (1) angeordnet ist.

3. Vorrichtung nach Anspruch 1 oder 2, dadurch gekennzeichnet, dass die Führungsmittel (23) eine gestellfeste Auflage aufweisen und auf diese Auflage eine Seitenplatte (13) der Andrückrolle (7) verschieblich aufliegt.

4. Vorrichtung nach Anspruch 3, dadurch gekennzeichnet, dass der Stellantrieb (15) zum Verschieben der Seitenplatte (13) gelenkig mit dieser verbunden ist.

5. Vorrichtung nach Anspruch 3 oder 4, dadurch gekennzeichnet, dass das zweite Ende (7b) der Achse (7) unmittelbar an der Seitenplatte (13) fest an dieser angebracht ist.

6. Vorrichtung nach einem der Ansprüche 3 bis 5, dadurch gekennzeichnet, dass an der Seitenplatte (13) berührungslose Steuertaster (18) angeordnet sind, die bei einem seitlichen Auswandern des Bandes (1) aufgrund einer Bewegung des Bandkantentasters (22) überdeckt werden.

7. Vorrichtung nach einem der Ansprüche 1 bis 6, gekennzeichnet durch einen im Bereich der zweiten Bandkante (1d) angeordneten Schwenkhebel (19,28), wobei an einem kürzeren Hebelarm (19a,28a) der Bandkantentaster (22) angebracht ist und ein längerer Hebelarm (19b,28b) mit dem Steuertaster (18) zusammenarbeitet.

8. Vorrichtung nach Anspruch 7, gekennzeichnet durch ein Zugorgan (17) das am zweiarmigen Hebel (19,28) angreift und den Bandkantentaster (22) gegen die zweite Bandkante (1d) spannt.

9. Vorrichtung nach einem der Ansprüche 6 bis 8, dadurch gekennzeichnet, dass zwei im Abstand zueinander angeordnete Steuertaster (18) vorgesehen sind und ein Hebelarm (19b,28b) zwischen diese Steuertaster (18) eingreift.

10. Vorrichtung nach einem der Ansprüche 1 bis 9, dadurch gekennzeichnet, dass der Bandkantentaster (22) einen Schlitz (22a) aufweist, in den eine Bandkante (1d) eingreift.
